Europäisches Patentamt

European Patent Office

Office européen des brevets

(11) Veröffentlichungsnummer: **0 253 233**
**B1**

# EUROPÄISCHE PATENTSCHRIFT

(45) Veröffentlichungstag der Patentschrift:
22.11.90

(51) Int. Cl.⁵: **B01J 20/14**

(21) Anmeldenummer: 87109590.7

(22) Anmeldetag: 03.07.87

(54) Regenerierung von Kieselgur.

(30) Priorität: 11.07.86 DE 3623484

(43) Veröffentlichungstag der Anmeldung:
20.01.88 Patentblatt 88/3

(45) Bekanntmachung des Hinweises auf die Patenterteilung:
22.11.90 Patentblatt 90/47

(84) Benannte Vertragsstaaten:
AT BE CH DE ES FR GB GR IT LI LU NL SE

(56) Entgegenhaltungen:
DE-C- 344 499
DE-C- 469 606
DE-C- 605 736
US-A- 1 545 322

DERWENT JAPANESE PATENTS REPORT, Sektion Ch,
Band R, Nr. 40, 27. November 1970, Klasse J p 2, Nr.
JA 7031516-B, Derwent Publications Ltd, London, GB; &
JP-B-65 62 545 (SAITO) 12-10-1970

(73) Patentinhaber: Henninger Bräu AG, Hainer Weg 37-53,
D-6000 Frankfurt/Main 70(DE)

(72) Erfinder: Sommer, Gert, Dr., Letzter Hasenpfad 129,
D-6000 Frankfurt/M 70(DE)

(74) Vertreter: Linser, Heinz, Patentanwälte Heinz Linser
Dipl. Ing. Eckhardt Eyer Robert-Bosch-Strasse 12a
Postfach 10 22 10, D-6072 Dreieich(DE)

## Beschreibung

Die Erfindung betrifft ein Verfahren zur Wiederaufbereitung von gebrauchter, als Filtermittel im Brauereiwesen verwendeter Kieselgur

Kieselgur, auch als Tripel, Bergmehl, oder Diatomeenerde bezeichnet, ist eine mehlige bis feste, kreideähnliche Masse von vorzugsweise weißer oder grüner Farbe. Es handelt sich dabei um die aus Kieselsäure bestehenden Panzer einzelliger, im Wasser lebender Algen (Diatomeen), die nach dem Absterben auf den Grund absinken und dort abbaubare Lagerstätten bilden. Die Panzer bestehen aus zwei Schalenhälften von unterschiedlichster Form und Gestalt. Bisher sind mehrere Tausend verschiedenartige Diatomeenarten bekannt.

Die große Bedeutung, die Kieselgur in der Technik heute einnimmt, beruht auf dem großen Aufsaugevermögen, dem Einsatz als Träger für Katalysatoren, flüssige, gelöste und feste Stoffe und vor allem auf der Verwendung als Filterhilfsmittel sowie als Füllstoff.

In den Brauereien fällt verbrauchte Kieselgur bei der Filtration der Würze und des gelagerten Bieres in erheblichen Mengen an.

Bei der Filtration der Würze werden Kieselgurfilter zur Entfernung des Kühltrubs eingesetzt. Die Filtration der Würze wird jedoch häufig auch durch Sedimentation im Kühlschiff oder Anstellbottich, durch Flotation oder Zentrifugieren betrieben. Dabei wird der Kühltrub zu etwa 60% zurückgehalten.

Vor dem Abfüllen muß das Bier noch einmal sorgfältig filtriert werden, um es blank und biologisch haltbar zu machen. Lediglich bei einigen obergärigen Bieren verzichtet man darauf, um den aromatischen Geschmack voll zu erhalten.

Bei der Kieselgur-Anschwemmfiltration wird dem Bier ein Gemisch aus feiner und grober Kieselgur als Filterhilfsmittel zugemischt. Zur Verbesserung der Filtrationseigenschaften werden auch Aktivkohle, Kieselgel und Perlite beigegeben. Auf einem Filtergewebe setzt sich die Gur mit den Trübstoffen ab und wird nach vollendeter Filtration pastös oder trocken ausgetragen.

Aus Gründen der Wirtschaftlichkeit wird sowohl im Hinblick auf die Beseitigung als auch auf eine spätere Verwertung die Kieselgur "trocken" aus den Filtern abgezogen. Auf diese Weise erspart man sich einen Teil der Transportkosten und die erforderliche Entwässerung vor der Deponierung.

Eine solche pastöse "Trockengur" hat nach dem Ausbringen aus dem Filter etwa die folgende Zusammensetzung:

Feuchtegehalt 68 - 75%
Kieselgur 20 - 27%
Organische Bestandteile ca. 5%

Der Feuchtegehalt rührt von dem nach der Filtration verbleibenden Restbier her.

Die von der Filtermasse aufgenommenen organischen Bestandteile setzen sich aus Hefe, Eiweiß und Hopfenharzen zusammen. Sie haben einen Brennwert von ca. 5000 kcal/kg (20 920 kJ/kg).

Legt man zur Abschätzung der Anfallmenge einen Bierausstoß von 91.044.000 hl/jato zugrunde, so erhält man in der BRD eine Gesamtanfallmenge an Kieselgur von 13 jato.

Die bei den Brauereien anfallende Kieselgur wird praktisch vollkommen beseitigt. Lediglich in einigen kleinen Brauereien wird sie dem Treber zugesetzt oder als Düngemittel auf landwirtschaftliche Flächen verteilt.

Die Beseitigung der Kieselgur erfolgt bisher durch folgende Maßnahmen:

a. Einlassen in eine Kläranlage.
Hierbei wird die Kieselgur mit Wasser aus den Filtern ausgeschwemmt und in eine Kläranlage eingeleitet. Bei einer betriebseigenen Kläranlage muß die Kieselgur mittels Saugkesselfahrzeugen aus den Absetzgruben abgepumpt und zur Beseitigung gefahren werden. Die direkte Einleitung in das Kanalnetz führt zur Verschlammung.

Das Einleiten in die Kanalisation ist jedoch aus Umweltgründen auf die Dauer nicht tragbar.

b. Einlassen in einen Vorfluter,
Das Einlassen des Kieselgur in den Vorfluter ohne vorhergehende Klärung dürfte nicht mehr zulässig sein.

c. Ablagerung auf einer Deponie.
Die Kieselgur kann trocken, d.h. durch vorsichtiges Abschaben von den Filtertüchern aus den Filterrahmen entfernt werden. Bei moderneren Anlagen erfolgt dies bereits automatisch. Sie wird dann im dickbreiigen Zustand auf die Deponie gefahren.

Es ist auch üblich, nur einen Teil der Kieselgur zu trocknen und auf die Deponie zu bringen. Der verbleibende Rest wird dann ausgeschwemmt und in das Abwasser gegeben.

Der Trockenaustrag der Kieselgur ist innerbetrieblich einfach zu lösen und bringt die vollständige Lösung der Abwasserfrage. Bei der Beseitigung sind jedoch einige Gesichtspunkte zu berücksichtigen.

Eine Deponierung des Kieselgur wird in Zukunft grundsätzlich nur möglich sein, wenn sie im stichfesten Zustand angeliefert wird. Ansonsten sind zusätzliche Gebühren für die Entwässerung zu bezahlen.

Der Transport der Gur bereitet jedoch ebenfalls Schwierigkeiten. Wegen des breiigen Zustandes können keine LKW's mit offener Ladefläche eingesetzt werden, da erfahrungsgemäß die Entladung und die Reinigung einen großen Aufwand erfordert. Der Hefegehalt und die dadurch, vor allem in den Sommermonaten, entstehenden Gase führen zu Aufblähungen der Gur und zu starken Geruchsbelästigungen. Ein Transport kann daher nur in Spezialfahrzeugen erfolgen, wodurch erhebliche Kosten entstehen.

Zur Lösung dieser vielfältigen Probleme wurde auch bereits der Vorschlag unterbreitet, zur Aufarbeitung der in Brauereien oder in chemischen Reinigungen verwendeten Kieselgur eine zentrale Anlage mit einem großen Durchsatz zu errichten. Hierzu wird auf den Forschungsbericht T 77-09 des Bundesministeriums für Forschung und Technologie vom Juli 1977 verwiesen. Mit Hilfe eines Wirbelbettofens sowie einem Zyklonabscheider, Elektrofilter und weiterer großtechnischer Geräte erfolgt eine Verbrennung der unschädlichen Inhaltstoffe.

Die erforderlichen Temperaturen erreichen eine Größe von etwa 700° C und der Durchsatz einer solchen Anlage beträgt 40t Filterrückstand pro Tag, entsprechend einem Bierausstoß von 16 Mio hl pro Jahr.

Neben den hohen Transportkosten des verbrauchten und aufgearbeiteten Kieselgur sind hohe Energiekosten für den Verbrennungsvorgang aufzubringen.

Ein weiterer Nachteil besteht darin, daß die verbrauchten Kieselgurmengen von den verschiedensten Brauereien der Großanlage zugeführt werden müssen, wobei die unterschiedlichen Korngrößen des eingebrachten Gutes vermischt werden.

Es hat sich herausgestellt, daß für den Filiervorgang bestimmter Biersorten ein definiertes Mischungsverhältnis der Korngrößen des Kieselgur vorteilhaft ist. Die aufgearbeitete Kieselgur weise ein davon abweichendes und nicht mehr ohne weiteres feststellbares Mischungsverhältnis der Korngrößen auf, so daß die Wiederverwendung nicht mehr die maximale Wirkung bei dem Filiervorgang erzielt.

Der Erfindung liegt die Aufgabe zugrunde ein Verfahren zur Aufarbeitung von Kieselgur anzugeben, welche in Brauereien anfällt, welches kostengünstig und umweltfreundlich ist und in der Brauerei selbst durchgeführt werden kann, wobei die hierfür erforderlichen Anlagen jedem Durchsatz angepaßt werden können.

Der Erfindung liegt die Erkenntnis zugrunde, daß eine chemische Naßaufbereitung der Filtergur direkt im verarbeitenden Betrieb sich wesentlich kostengünstiger durchführen läßt.

Die Lösung dieser Aufgabe besteht darin, daß die gebrauchte Kieselgur mit einer 2 bis 8%igen Natronlauge bei einer Reaktionstemperatur von 60 bis 90°C versetzt und einer Reaktionszeit von 30 bis 120 Minuten unter schonendes Rühren ausgesetzt wird.

Die Konzentration der Natronlauge beträgt vorzugsweise 4 bis 5 %, die Reaktionstemperatur 80 bis 90°C und die Reaktionszeit eine Stunde.

Bei einer solchen einstündigen Behandlung der Kieselgur werden praktisch alle eiweißhaltigen Substanzen sowie die Hefe nahezu vollständig entfernt. Die Kieselgur enthält dann nur noch ca. 1 bis 2 % organische Substanz, die überwiegend aus Polysacchariden besteht. Diese können bei Bedarf durch eine Säurehydrolyse mit Schwefelsäure oder Salzsäure entfernt werden.

Bei den Filtrationsversuchen stellte es sich jedoch heraus, daß diese Polysaccharide die Filtration nicht stören, so daß sie nicht unbedingt entfernt werden müssen.

Bei der Wiederaufarbeitung von Kieselgur ist mit einem Zusatz von ungebrauchter Gur in Höhe von 10 bis 20% zu rechnen. Aus diesem Grunde kann der Gehalt an organischer Substanz in der aufbereiteten Kieselgur, auch bei ununterbrochener Aufbereitung, nicht über 8 % ansteigen. Hierdurch wird die Filtrationswirkung der Kieselgur in keine Weise ungünstig beeinträchtigt.

Das Verfahren nach der Erfindung wird wie folgt durchgeführt.

Die gebrauchte Kieselgur aus dem Filter wird in ein beheizbares Gefäß ausgetragen und mit 4 bis 5%iger Natronlauge versetzt. Die Reaktionstemperatur beträgt dabei 80 bis 90°C und die Reaktionszeit etwa eine Stunde. Durch schonendes Rühren oder Einblasen von Luft wird das Substrat während der Reaktionszeit gleichmäßig durchmischt.

Die Entfernung der Natronlauge und das Klarspülen der Kieselgur erfolgt vorzugsweise mit Hilfe eines Vakuum- bzw. Druckbandfilters im Gegenstrom in etwa 4 bis 5 Extraktionsstufen. Zur restlosen Entfernung der Lauge kann dem Spülwasser der letzten Extraktionsstufe bis zu 0,1 % Schwefelsäure oder Salzsäure zugesetzt werden.

Bis zur Wiederverwendung wird die gereinigte und regenerierte Kieselgur unter Wasser aufbewahrt.

Zur Ergänzung der Verluste bei der Aufbereitung ist mit einem Zusatz von 10 bis 20 % neuer Gur zu rechnen.

Die Durchgeführten Filtrationsversuche mit bis zu fünf mal regenerierter Kieselgur ohne Zusatz von ungebrauchter Gur zeigten keine Veränderungen gegenüber der normalen Filtration.

Die Filtrationsergebnisse von regenerierter Kieselgur im Vergleich zur Originalkieselgur, die mit Hilfe eines Laborversuchsfilters gewonnen wurden, sind in den folgenden Tabellen dargestellt.

Versuchsfiltration:

Da in dem untersuchten Betrieb mit einer Vor- und Nachfiltration mit Kieselgur gearbeitet wird, erfolgte eine getrennte Aufbereitung der Kieselguren aus den beiden Filtern.

1. Aufbereitung der Kieselgur aus dem Vorfilter (Grobgur).

In mehreren Vergleichen wurde die gebrauchte Kieselgur des Betriebes nach dem beschriebenen Verfahren aufbereitet und im Vergleich zur ungebrauchten Kieselgur geprüft (Versuch Nr. 1 bis 3). Zusätzlich wurde in einem weiteren Versuch die Kieselgur fünf mal regeneriert und ohne Zusatz von neuer Gur zur Filtration eingesetzt (Versuch Nr. 4 bis 8).

Die Angabe Δp bezieht sich auf den Differenzdruck bei gleicher Filtrationszeit.

Tabelle 1

Filtrationsversuche mit regenerierter Kieselgur (Grobgur).

| Versuch Nummer | Vergleich $\Delta p$ | regenerierte Gur $\Delta p$ |
|---|---|---|
| 1 | 2,1 | 1,8 |
| 2 | 4,5 | 2,4 |
| 3 | 6,0 | 1,0 |
| 4 | – | 1,9 |
| 5 | – | 1,8 |
| 6 | 4,0 | 1,8 |
| 7 | 2,8 | 4,0 |
| 8 | 3,8 | 4,1 |

2. Aufbereitung der Kieselgur aus dem Nachfilter (Gemisch aus grober und feiner Kieselgur und Kieselgel).

Tabelle 2

| Versuchs- Nummer | Vergleichs- $\Delta p$ | regenerierte Gur $\Delta p$ |
|---|---|---|
| 1 | 0,7 | 0,2 |
| 2 | 0,7 | 0,2 |
| 3 | 0,6 | 0,1 |
| 4 | 0,8 | 0,2 |

Die Filtrationsergebnisse zeigen klar, daß die Regenerierung keine nachteilige Wirkung auf die Filterleistung hatte.

Bei der feineren Gur konnte sogar eine deutliche Erhöhung der Filterleistung erzielt werden, ohne daß sich Trübung und Kältetrübung des Bieres verschlechterten.

Die gemäß der Erfindung gestellten Aufgaben werden damit vollständig gelöst.

**Patentansprüche**

1. Verfahren zur Wiederaufbereitung von gebrauchter, als Filtermittel im Brauereiwesen verwendeter Kieselgur, dadurch gekennzeichnet, daß die gebrauchte Kieselgur mit einer 2 bis 8%igen Natronlauge bei einer Reaktionstemperatur von 60 bis 90°C versetzt und einer Reaktionszeit von 30 bis 120 Minuten unter schonendes Rühren ausgesetzt wird.

2. Verfahren nach Anspruch 1, dadurch gekennzeichnet, daß die Konzentration der Natronlauge 4 bis 5 % beträgt.

3. Verfahren nach Anspruch 1 oder 2, dadurch gekennzeichnet, daß die Reaktionstemperatur 80 bis 90°C beträgt.

4. Verfahren nach Anspruch 1, 2 oder 3, dadurch gekennzeichnet, daß die gebrauchte Kieselgur in ein beheizbares Gefäß ausgetragen wird.

5. Verfahren nach Anspruch 1 oder einem der voranstehenden, dadurch gekennzeichnet, daß die Entfernung der Natronlauge nach Ablauf der Reaktionszeit und das Klarspülen der Kieselgur mit Hilfe eines Vakuum- bzw. Druckbandfilters in mehrere Extraktionsstufen erfolgt.

6. Verfahren nach Anspruch 1 oder einem der voranstehenden, dadurch gekennzeichnet, daß zur restlosen Entfernung der Lauge dem Spülwasser in der letzten Extraktionsstufe Schwefel- oder Salzsäure mit einer Konzentration bis zu 0,1 % zugesetzt werden.

**Claims**

1. A process for recycling used kieselguhr employed as filter material in the brewing industry, characterized in that the used kieselguhr is mixed with a 2 to 8% sodium hydroxide solution at a reaction temperature of 60 to 90°C and reacted for 30 to 120 minutes under gentle agitation.

2. A process according to claim 1, characterized in that the concentration of the sodium hydroxide solution is 4 to 5%.

3. A process according to claim 1 or 2, characterized in that the reaction temperature is 80 to 90°C.

4. A process according to claim 1, 2 or 3, characterized in that the used kieselguhr is poured into a heatable container.

5. A process according to any preceding claim, characterized in that the sodium hydroxide solution is removed upon expiration of the reaction time and the kieselguhr is washed in several extraction phases by means of a vacuum or pressure band filter.

6. A process according to any preceding claim, characterized in that, for the complete removal of the solution, sulphuric or hydrochloric acid is added to the wash water in the last extraction phase in a concentration of up to 0.1%.

**Revendications**

1. Procédé de retraitement de terre d'infusoires épuisée, utilisée comme milieu filtrant en brasserie, caractérisé en ce que la terre d'infusoires épuisée est mélangée à une lessive de soude à 2 à 8%, à une température de réaction de 60 à 90°C, et est exposée à une durée de réaction de 30 à 120 minutes en agitant avec soin.

2. Procédé selon la revendication 1, caractérisé en ce que la concentration de la lessive de soude est de 4 à 5%.

3. Procédé selon la revendication 1 ou 2, caractérisé en ce que la température de réaction est de 80 à 90°C.

4. Procédé selon la revendication 1, 2 ou 3, caractérisé en ce que la terre d'infusoires épuisée est déchargée dans un récipient pouvant être chauffé.

5. Procédé selon la revendication 1 ou l'une des revendications précédentes, caractérisé en ce que l'élimination de la lessive de soude après l'écoulement du temps de réaction, et le lavage de la terre d'infusoires à l'aide d'un filtre à aspiration ou d'un filtre presse se fait en plusieurs étapes d'extraction.

6. Procédé selon la revendication 1 ou l'une des revendications précédentes, caractérisé en ce que, pour l'élimination complète de la lessive, on ajoute à l'eau de lavage, dans les dernières étapes d'extraction, de l'acide sulfurique ou de l'acide chlorhydrique à une concentration allant jusqu'à 0,1%.